**Europäisches Patentamt**

**European Patent Office**

**Office européen des brevets**

(19)

(11) Veröffentlichungsnummer: **0 205 810**
A2

# (12) EUROPÄISCHE PATENTANMELDUNG

(21) Anmeldenummer: **86105494.8**

(22) Anmeldetag: **21.04.86**

(51) Int. Cl.⁴: **B 65 D 51/00**

(30) Priorität: **25.06.85 DE 8518428 U**

(43) Veröffentlichungstag der Anmeldung: **30.12.86**
Patentblatt 86/52

(84) Benannte Vertragsstaaten: **AT BE CH DE FR GB IT LI LU NL SE**

(71) Anmelder: **SID-WERK GmbH, Industriestrasse 9/13, D-4048 Grevenbroich (DE)**

(72) Erfinder: **Blau, Jürgen, Hemmerdener Weg 14, D-4048 Grevenbroich 2 (DE)**

(74) Vertreter: **Patentanwälte Schaumburg & Thoenes, Mauerkircherstrasse 31 Postfach 86 07 48, D-8000 München 80 (DE)**

(54) Verschlussdeckel für den Füllstutzen eines Behälters.

(57) Ein Verschlußdeckel für den Füllstutzen (68) eines Behälters umfaßt eine Kappe (10) mit einem axial gerichteten zentralen Fortsatz (14) an der Kappenunterseite, ein Schließteil (18) mit daran drehfest angeordneten radial gerichteten Riegelnasen (28), die zum Untergreifen einer Schließkante am Füllstutzen (68) bestimmt sind, und eine koaxial zum Kappenfortsatz (14) angeordnete Ringdichtung (82), die in der Verriegelungsstellung des Deckels unter Federkraft an einer in axiale Richtung weisenden Dichtfläche des Füllstutzens (68) anliegt. Zur Verminderung der Bedienungskraft und des Verschleißes der Dichtung ist das Schließteil (18) mit einem axial gerichteten Führungsteil (20) in einer die Kappe (10) und den Kappenfortsatz (14) durchsetzenden Durchbrechung (16) axial verschiebbar und gegenüber der Kappe (10) verdrehbar geführt. Ferner ist an dem über die Kappenoberseite (30) hinausragenden freien Ende (32) des Führungsteils (20) ein Spannhebel (34) um eine zur Kappenachse (22) senkrecht gerichtete Klappachse (38) klappbar gelagert, der zur Abstützung an der Kappenoberseite (30) mindestens eine zur Klappachse (38) exzentrische Nockenfläche aufweist.

EP 0 205 810 A2

ACTORUM AG

- 1 -

Verschlußdeckel für den Füllstutzen eines
Behälters

Die Neuerung betrifft einen Verschlußdeckel für den Füllstutzen eines Behälters, insbesondere Kraftstoffbehälters oder Kühlers von Kraftfahrzeugen, umfassend eine Kappe mit einem axial gerichteten zentralen Fortsatz an der Kappenunterseite, ein Schließteil mit daran drehfest angeordneten radial gerichteten Riegelnasen, die zum Untergreifen einer Schließkante am Füllstutzen bestimmt sind, und eine koaxial zum Kappenfortsatz angeordnete Ringdichtung, die in der Verriegelungsstellung des Deckels unter Federkraft an einer in axiale Richtung weisenden Dichtfläche des Füllstutzens anliegt.

Bei den bekannten Verschlußdeckeln der vorstehend genannten Art ist der zentrale Kappenfortsatz üblicherweise mit dem Schließteil drehfest verbunden. Dies hat in der Regel den Nachteil, daß die Ringdichtung beim Öffnen und Schließen des Deckels auf der Dichtfläche des Füllstutzens reibt, wobei die Reibungskräfte bei Annäherung des Deckels an seine Verriegelungsstelle zunehmen. Die Ringdichtung ist dadurch einem hohen Verschleiß unterworfen. Dieses Problem ist bei dem aus dem deutschen Gebrauchsmuster 85 13 655 bekannten Verschlußdeckel dadurch gelöst, daß die Ringdichtung an einem gegenüber der Kappe drehbaren und gegenüber dem Füllstutzen stationär gehaltenen Dichtungsträger angeordnet ist. Um den Kraftaufwand bei der Öffnungs- bzw. Schließbewegung des Deckels, bei der die Riegelnasen entlang einer schraubenlinienförmigen Schließkante des Füllstutzens gleiten, gering zu halten, ist ein Steuerkurvenmechanismus vorgesehen, durch den das Schließteil und der Dichtungsträger während des größten Teiles der Schließ- bzw. Verriegelungsbewegung des Schließteiles so weit auf Abstand gehalten werden, daß sich die Riegelnasen ohne große Reibung entlang der Schließkante des Füllstutzens bewegen können. Bei Verwendung dieses bekannten Verschlußdeckels muß die Schließkante des Füllstutzens zwingend schraubenlinienförmig ausgebildet sein.

Der Neuerung liegt die Aufgabe zugrunde, einen mit minimalem Kraftaufwand zu bedienenden Verschlußdeckel der eingangs genannten Art anzugeben, dessen Dichtung einem geringen Verschleiß ausgesetzt ist und der sich durch einen einfachen konstruktiven Aufbau auszeichnet.

Diese Aufgabe wird neuerungsgemäß dadurch gelöst, daß das Schließteil mit einem axial gerichteten Führungsteil in einer die Kappe und den Kappenfortsatz durchsetzenden Durchbrechung axial verschiebbar und gegenüber der Kappe verdrehbar geführt ist und daß an dem über die Kappenoberseite hinausragenden freien Ende des Führungsteils ein Spannhebel um eine zur Kappenachse senkrecht gerichtete Klappachse klappbar gelagert ist, der zur Abstützung an der Kappenoberseite mindestens eine zur Klappachse exzentrische Nockenfläche aufweist.

Bei der neuerungsgemäßen Lösung sind die beim Öffnen und Schließen des Deckels auftretenden Bewegungen des Schließteils, nämlich die Drehbewegung relativ zum Füllstutzen und die axiale Bewegung zur Kappe hin bzw. von der Kappe weg voneinander völlig entkoppelt. Das Schließteil wird also während seiner Drehbewegung von seiner Öffnungsstellung in seine Schließstellung, bei der die am Schließteil angeordneten Riegelnasen die Schließkante am Füllstutzen sicher untergreifen, nicht gleichzeitig in axialer Richtung zur Schließkante des Füllstutzens hin bewegt. Das bedeutet, daß die Riegelnasen während der gesamten Drehbewegung des Schließteils nicht oder nur leicht an der Schließkante des Füllstutzens anliegen. Das Schließteil kann somit nur durch Verdrehen des Spannhebels nahezu reibungsfrei und daher mit minimalem Kraftaufwand in seine Schließstellung gebracht werden. Erst anschließend wird der Spannhebel durch Umklappen in seine Verriegelungsstellung gebracht, in der die Ringdichtung unter Federkraft an der Dichtfläche des Füllstutzens anliegt. Die an der Kappenoberseite anliegende zur Klappachse exzentrische Nockenfläche ist derart am Spannhebel ausgebildet, daß beim Umklappen desselben das mit ihm verbundene Schließteil in Richtung zur Kappe und somit auch zur Schließkante des Füllstutzens hin bewegt wird, wodurch die am Schließteil angeordneten Riegelnasen durch Federkraft gegen die Schließkante gespannt werden. Diese Federkraft kann beispielsweise durch Druckfedern, die die Ringdichtung an der Kappenunterseite abstützen, durch eine Zugfeder, die das Schließteil mit seinem Führungsteil verbindet, oder auch durch die Riegelnasen tragende Federbügel bereitgestellt werden. Sie bewirkt, daß die Ringdichtung und die Riegelnasen gegeneinander verspannt werden, wobei die Ringdichtung gegen die Dichtfläche des Füllstutzens gepreßt wird.

Beim Öffnen des Deckels wird zuerst der Spannhebel hochgeklappt, wobei ein im Behälter ggf. vorhandener Überdruck gefahrlos entweichen kann. Da die am Schließteil angeordneten Riegelnasen die Schließkante am Füllstutzen untergreifen, wird ein Wegschleudern des Deckels durch einen möglichen Überdruck verhindert. Erst anschließend wird das Schließteil durch Verdrehen des Spannhebels in seine Öffnungsstellung gebracht, in der der Deckel vom Füllstutzen abgenommen werden kann.

Da diese Drehbewegung beim Öffnen, ebenso wie die Drehbewegung beim Schließen, nahezu reibungsfrei erfolgt, ist eine Bedienung des Deckels mit nur minimalem Kraftaufwand gewährleistet.

Da ferner die Kappe des Deckels sowohl während des Verschließens als auch während des Öffnens des Deckels gegenüber dem Füllstutzen stationär gehalten wird, kann die Ringdichtung in einfacher Weise an der Kappenunterseite befestigt werden, ohne einen Verschleiß der Ringdichtung durch Abrieb an der Dichtfläche des Füllstutzens befürchten zu müssen.

Der neuerungsgemäße Verschlußdeckel zeichnet sich darüber hinaus durch seinen einfachen konstruktiven Aufbau aus.

Ein weiterer Vorteil dieses neuerungsgemäßen Verschlußdeckels ist darin zu sehen, daß die Schließkante am Füllstutzen aufgrund der Entkopplung der Drehbewegung und der axialen Bewegung des Schließteils nicht zwingend schraubenlinienförmig ausgebildet sein muß. Sie kann beispielsweise annähernd parallel zur Dichtfläche verlaufen, was durch einfaches Umbördeln des Füllstutzenrandes erzielt werden könnte.

Bei einem Verschlußdeckel mit einem koaxial zum Kappenfortsatz angeordneten Zentrierteil zum Zentrieren des Deckels auf dem Füllstutzen ist das Zentrierteil zweckmäßigerweise mit dem Kappenfortsatz starr verbunden und weist zwei diametral gegenüberliegende zum Eingriff mit jeweils einer Aussparung am Füllstutzen bestimmte Arretierungselemente auf. Diese Weiterbildung der Neuerung hat den Vorteil, daß die

0205810

Deckelkappe während des Öffnens und Schließens des Deckels gegenüber dem Füllstutzen stationär gehalten wird.

Um die Funktionssicherheit des Verschlußdeckels zu erhöhen und die Bedienung zu erleichtern, ist in einer Weiterbildung der Neuerung mindestens ein Drehrichtungsanschlag zur Begrenzung der Drehbewegung des Schließteils relativ zur Kappe in Schließrichtung vorgesehen.

Zweckmäßigerweise ist der Drehrichtungsanschlag an dem Zentrierteil angeordnet, sofern dieses mit dem Kappenfortsatz starr verbunden ist. Er könnte aber auch, gemäß einer anderen Ausbildung der Neuerung, an der Kappenunterseite selbst angeordnet sein.

Zweckmäßigerweise beträgt der Drehwinkel zwischen der Öffnungsstellung des Schließteils, bei der die an diesem angeordneten Riegelnasen mit den Arretierungselementen des Zentrierteils fluchten, und der durch den Drehrichtungsanschlag bestimmten Schließstellung relativ zur Kappe ca. 90°, da dann die Riegelnasen den größten Abstand zu den Aussparungen am Füllstutzen haben. Dadurch ist ein sicherer Halt des Verschlußdeckels auf dem Füllstutzen gewährleistet.

In einer Weiterbildung der Neuerung ist das Zentrierteil mit einer an seiner der Kappenunterseite zugewandten Seite angeordneten ringförmigen Ausnehmung für die Ringdichtung ausgebildet. Dies hat den Vorteil, daß die Ringdichtung zwischen der Kappenunterseite und dem Zentrierteil gehalten wird, ohne daß sie an der Kappenunterseite befestigt, beispielsweise angeklebt zu sein braucht. In diesem Falle ist ein Auswechseln der Ringdichtung in einfacher Weise möglich.

In einer vorteilhaften Weiterbildung der Neuerung ist in der Durchbrechung des Kappenfortsatzes radial zwischen der Außenseite des Schließteil-Führungsteils und der Innenseite des Kappenfortsatzes ein Dichtungsring angeordnet, der den aufgrund der Maßtoleranzen ggf. auftretenden Spalt zwischen der Durchbrechung im Kappenfortsatz und dem Führungsteil gasdicht abdichtet.

In einer vorteilhaften Ausführung des Verschlußdeckels ist der Spannhebel flächig und im wesentlichen kreissektorförmig ausgebildet und weist an seinem dem Kreisbogen abgewandten Ende eine das über die Kappenoberseite hinausragende freie Ende des Führungsteils umgreifende und mit diesem gelenkig verbundene Gabel auf, an deren Gabelenden jeweils eine zur Klappachse exzentrische Nockenfläche vorgesehen ist. Ein derart ausgebildeter Spannhebel kann in einfacher Weise sowohl um die Kappenachse gedreht als auch um die Klappachse geklappt werden, da durch die flächige Ausbildung eine gute Handhabbarkeit gewährleistet ist.

In einer weiteren bevorzugten Weiterbildung der Neuerung ist an der Kappenoberseite eine zum Spannhebel komplementäre Aussparung zur Aufnahme des Spannhebels in seiner umgeklappten, der Verriegelungsstellung entsprechenden Stellung vorgesehen. Diese Ausbildung der Neuerung zeichnet sich dadurch aus, daß der Verschlußdeckel im verriegelten Zustand eine im wesentlichen glatte Oberfläche ohne kantige Erhebungen aufweist, an denen man sich ggf. verletzen könnte.

In einer weiteren Ausbildung der Neuerung ist mindestens ein die Riegelnasen aufweisender Federbügel am Verriegelungsteil angeordnet. Die Verwendung mindestens eines Federbügels mit Riegelnasen hat den Vorteil, daß separate Federelemente eingespart werden können, durch die die Ringdichtung an die Dichtfläche des Füllstutzens angedrückt wird. Als Federbügelmaterial ist vorzugsweise Stahl und Kunststoff geeignet.

Zur Erzeugung einer großen Federkraft zum Andrücken der Ringdichtung an die Dichtfläche des Dichtstutzen können die Riegelnasen durch Druckfedern am Schließteil abgestützt sein.

Weitere Merkmale und Vorteile der Neuerung ergeben sich aus der folgenden Beschreibung, welche in Verbindung mit den beigefügten Figuren die Neuerung anhand eines Ausführungsbeispieles erläutert. Es zeigen

Fig. 1     eine Draufsicht auf die Unterseite eines neuerungsgemäßen Verschlußdeckels mit einem Abschnitt des Füllstutzens,

Fig. 2     einen die Achse enthaltenden Schnitt durch den Verschlußdeckel von Fig. 1, wobei die linke Hälfte des Schnittes den Deckel in seiner Verriegelungsstellung auf dem Füllstutzen und die rechte Hälfte den Deckel in seiner Schließstellung auf dem Füllstutzen zeigen und

Fig. 3     eine Draufsicht auf die Oberseite des Verschlußdeckels von Fig. 1 und 2, wobei die linke Hälfte der Draufsicht den Deckel in seiner Verriegelungsstellung und die rechte Hälfte den Deckel in seiner Schließstellung zeigen.

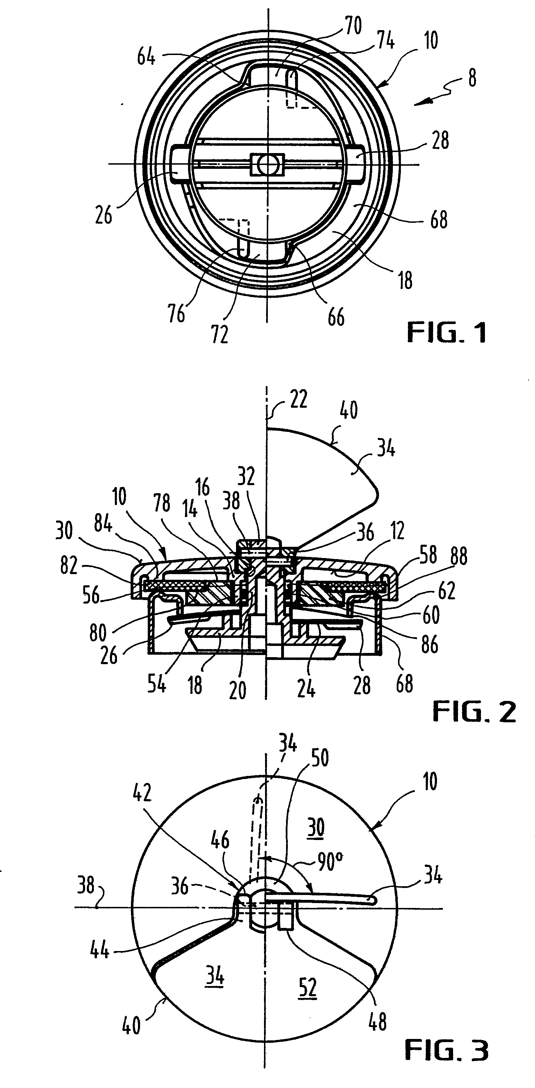

Der in den Figuren 1 bis 3 dargestellte Verschlußdeckel 8 umfaßt eine Kappe 10, an deren Kappenunterseite 12 ein axial gerichteter, im wesentlichen zylindrischer Fortsatz 14 angesetzt ist. Sowohl die Kappe 10 als auch der Kappenfortsatz 14 weisen eine axial gerichtete Durchbrechung 16 auf, in der ein scheibenförmiges Schließteil 18 mit einem axial gerichteten Führungsteil 20 axial verschiebbar und gegenüber der Kappe 10 um die Kappenachse 22 verdrehbar geführt ist. An dem Schließteil 18 ist ein Federbügel 24 drehfest angeordnet, der mit seinen Enden die Riegelnasen 26 und 28 bildet. Als Material für den Federbügel 24 eignet sich sowohl Stahl als auch Kunststoff.

An dem über die Kappenoberseite 30 hinausragenden freien Ende 32 des Schließteil-Führungsteils 20 ist ein Spannhebel 34 mittels eines Verbindungsstiftes 36 um eine zur Kappenachse 22 senkrecht gerichtete Klappachse 38 umklappbar angelenkt. Der Spannhebel 34 ist flächig und im wesentlichen kreissektorförmig ausgebildet und weist an seinem dem Kreisbogen 40 abgewandten Ende 42 eine das über die Kappenoberseite 30 hinausragende freie Ende 32 des Führungsteils 20 umgreifende und mit diesem über den Verbindungsstift 36 verbundene Gabel 44 auf, an deren Gabelenden 46 und 48 jeweils eine zur Klappachse 38 exzentrische Nockenfläche vorgesehen ist. Diese Nockenflächen stützen sich an einer kreisringförmigen Vertiefung 50 an der Kappenoberseite 30 ab. Zur Aufnahme des Spannhebels 34 in seiner umgeklappten, der Verriegelungsstellung des Verschlußdeckels entsprechenden Stellung ist an der Kappenoberseite 30 eine zum Spannhebel 34 komplementäre Aussparung 52 vorgesehen.

Der Kappenfortsatz 14 weist an seiner dem scheibenförmigen Schließteil 18 zugewandten Seite eine Führungshülse 54 auf, deren Innendurchmesser dem Außendurchmesser eines durchmessergrößeren Abschnittes des Schließteil-Führungsteils 20 entspricht. In dem radialen Zwischenraum zwischen der Außenseite 56 des im Kappenfortsatz geführten Abschnittes des Führungsteils 20 und der Innenseite 58 der Führungshülse 54 des Kappenfortsatzes 14 ist ein Dichtungsring 60 angeordnet, der ein Entweichen von Flüssigkeit oder Dämpfen zwischen dem Schließteil 20 und dem Kappenfortsatz 14 aus dem durch den Deckel 8 zu verschließenden Behälter verhindert.

Auf den Außenumfang der Führungshülse 54 des Kappenfortsatzes 14 ist ein axial zu dieser angeordnetes Zentrierteil 62 aufgezogen und somit mit dem Kappenfortsatz 14 starr verbunden. Das Zentrierteil 62 weist zwei diametral gegenüberliegende zum Eingriff mit jeweils einer Aussparung 64 und 66 am Füllstutzen 68 bestimmte Arretierungselemente 70 und 72 auf. Ferner sind an dem Zentrierteil 62 zwei parallel wirkende Drehrichtungsanschläge 74 und 76 vorgesehen, an denen das Schließteil 18 zur Begrenzung seiner Drehbewegung relativ zur Kappe 10 in Schließrichtung zur Anlage kommt.

An seiner der Kappenunterseite 12 zugewandten Seite 78 ist das scheibenförmige Zentrierteil 62 am radial äußeren Rand mit einer Ausnehmung 80 für eine Ringdichtung 82 versehen. Diese liegt zusätzlich an einem an der Kappenunterseite 12 vorgesehenen ringförmigen Vorsprung 84 an. Wenn in der Verriegelungsstellung des Deckels 8 die federnd am Schließteil 18 angeordneten Riegelnasen 26 und 28 gegen die Schließkante 86 des Füllstutzens 68 gedrückt werden, dann wird die Ringdichtung 82 mit dieser Federkraft an die in axiale Richtung weisende Dichtfläche 88 des Füllstutzens 68 angedrückt. In dieser Stellung des Deckels 8 dient der ringförmige Vorsprung 84 als Widerlager für die Ringdichtung 82.

Beim Verschließen des Füllstutzens 68 wird der Verschlußdeckel 8 auf den Füllstutzen 68 derart aufgesetzt, daß die Riegelnasen 26 und 28 und die Arretierungselemente 70 und 72 am Zentrierteil 62, die in der Öffnungsstellung des Deckels 8 miteinander fluchten, in die Aussparungen 64 und 66 des Füllstutzens 68 eingreifen. Diese Aussparungen oder radialen Ausbuchtungen 64 und 66 müssen in einem Füllstutzen, der durch Deckel mit einem Bajonettverschluß verschließbar ist, vorhanden sein. Durch die in die Ausbuchtungen 64 und 66 eingreifenden Arretierungselemente 70 und 72 des Zentrierteiles 62 wird die mit diesem drehfest verbundene Kappe 10 an einer Drehung gegenüber dem Füllstutzen 68 gehindert. Nach dem Aufsetzen der Kappe 10 auf den Füllstutzen 68 wird der in der Fig. 3 in seiner Öffnungsstellung gestrichelt dargestellte Spannhebel 34 um etwa 90° im Uhrzeigersinn in seine Schließstellung gedreht, in der er in der linken Hälfte der Fig. 3 in der Draufsicht zu erkennen ist. Während dieser Drehbewegung liegen die am Schließteil 18 angeordneten Riegelnasen 26 und 28 nicht an der Schließkante 86 des Füllstutzens 68 an. Diese Drehbewegung kann daher mit nur minimalem Kraftaufwand ausgeführt werden. In der dann erreichten Schließstellung des Deckels 8 untergreifen die Riegelnasen 26 und 28 die Schließkante 86 des Füllstutzens 68 sicher. Anschließend kann die Verriegelungsbewegung des Schließteiles 18 in axialer Richtung erfolgen, wodurch die federnd am Schließteil 18 angeordneten Riegelnasen 26 und 28 durch Federkraft von unten gegen die Schließkante 86 des Füllstutzens 68 und die Ringdichtung 82 von oben gegen die Dichtfläche 88 des Füllstutzens 68 gespannt werden. Diese Verriegelungsbewegung des Schließteiles 18 wird durch Umklappen des Spannhebels 34 in seine in der linken Hälfte von Fig. 3 dargestellte Verriegelungsstellung bewirkt. Das Umsetzen der Klappbewegung des Spannhebels 34 in eine axiale Bewegung des Schließteiles 18 erfolgt durch die an den Gabelenden 46 und 48 des Spannhebels 34 exzentrisch zur Klappachse 38 angeordneten Nockenflächen. In seiner in der linken Hälfte der Fig. 3 dargestellten Verriegelungsstellung befindet sich der Spannhebel 34 nahezu vollständig in der Aussparung 52 an der Kappenoberseite 30.

Beim Öffnen des Füllstutzens 68 wird der Spannhebel 34 von seiner Verriegelungsstellung zunächst in seine in der rechten Hälfte von Fig. 3 dargestellte Schließstellung hochgeklappt, wobei ein im Behälter ggf. vorhandener Überdruck gefahrlos entweichen kann, da die die Schließkante 86 untergreifenden Riegelnasen 26 und 28 ein sonst mögliches Abheben des Deckels verhindern. Da die Ringdichtung 82 und die Riegelnasen 26 und 28 durch das Hochklappen des Spannhebels 34 entlastet werden, kann das Schließteil 18 anschließend reibungsfrei und daher mit minimalem Kraftaufwand wieder in seine Öffnungsstellung gedreht werden, in der die Riegelnasen 26 und 28 mit den Arretierungselementen 70 und 72 des Zentrierteils 62 fluchten, so daß der Deckel 8 von dem Füllstutzen 68 abgenommen werden kann.

Da die Drehbewegung beim Öffnen und Schließen nahezu reibungsfrei erfolgt, ist eine Bedienung des Deckels 8 mit nur minimalem Kraftaufwand gewährleistet. Da ferner die Kappe 10 des Deckels 8 während des Verschließens und während des Öffnens gegenüber dem Füllstutzen 68 stationär gehalten wird, kann die Ringdichtung 82 in einfacher Weise an der Kappenunterseite 12 befestigt werden, ohne einen Verschleiß der Ringdichtung 82 durch Abrieb an der Dichtfläche 88 des Füllstutzens 68 befürchten zu müssen.

Patentansprüche

1. Verschlußdeckel für den Füllstutzen eines Behälters, insbesondere Kraftstoffbehälters oder Kühlers von Kraftfahrzeugen, umfassend eine Kappe mit einem axial gerichteten zentralen Fortsatz an der Kappenunterseite, ein Schließteil mit daran drehfest angeordneten radial gerichteten Riegelnasen, die zum Untergreifen einer Schließkante am Füllstutzen bestimmt sind, und eine koaxial zum Kappenfortsatz angeordnete Ringdichtung, die in der Verriegelungsstellung des Deckels unter Federkraft an einer in axiale Richtung weisenden Dichtfläche des Füllstutzens anliegt, dadurch g e k e n n z e i c h n e t, daß das Schließteil (18) mit einem axial gerichteten Führungsteil (20) in einer die Kappe (10) und den Kappenfortsatz (14) durchsetzenden Durchbrechung (16) axial verschiebbar und gegenüber der Kappe (10) verdrehbar geführt ist und daß an dem über die Kappenoberseite (30) hinausragenden freien Ende (32) des Führungsteils (20) ein Spannhebel (34) um eine zur Kappenachse (22) senkrecht gerichtete Klappachse (38) klappbar gelagert ist, der zur Abstützung an der Kappenoberseite (30) mindestens eine zur Klappachse (38) exzentrische Nockenfläche (46, 48) aufweist.

2. Verschlußdeckel nach Anspruch 1, mit einem koaxial zum Kappenfortsatz angeordneten Zentrierteil zum Zentrieren des Deckels auf dem Füllstutzen, dadurch g e k e n n - z e i c h n e t , daß das Zentrierteil (62) mit dem Kappenfortsatz (14) starr verbunden ist und zwei diametral gegenüberliegende zum Eingriff mit jeweils einer Aussparung (64, 66) am Füllstutzen (68) bestimmte Arretierungselemente (70, 72) aufweist.

3. Verschlußdeckel nach Anspruch 1 oder 2, dadurch g e - k e n n z e i c h n e t , daß mindestens ein Drehrichtungsanschlag (74, 76) zur Begrenzung der Drehbewegung des Schließteils (18) relativ zur Kappe (10) in Schließrichtung vorgesehen ist.

4. Verschlußdeckel nach Anspruch 3, dadurch g e k e n n - z e i c h n e t , daß der Drehrichtungsanschlag (74, 76) an dem Zentrierteil (62) angeordnet ist.

5. Verschlußdeckel nach Anspruch 3 oder 4, dadurch g e - k e n n z e i c h n e t , daß der Drehwinkel zwischen der Öffnungsstellung des Schließteils (18), bei der die an diesem angeordneten Riegelnasen (26, 28) mit den Arretierungselementen (70, 72) des Zentrierteils (62) fluchten, und der durch den Drehrichtungsanschlag (74, 76) bestimmten Schließstellung relativ zur Kappe (10) ca. 90° beträgt.

6. Verschlußdeckel nach einem der vorhergehenden Ansprüche, dadurch g e k e n n z e i c h n e t , daß die Ringdichtung (82) an der Kappenunterseite (12) befestigt ist.

7. Verschlußdeckel nach einem der Ansprüche 2 bis 6, dadurch g e k e n n z e i c h n e t , daß das Zentrierteil (62) mit einer an seiner der Kappenunterseite (12) zugewandten Seite (78) angeordneten ringförmigen Ausnehmung (80) für die Ringdichtung (82) ausgebildet ist.

8. Verschlußdeckel nach einem der vorhergehenden Ansprüche, dadurch g e k e n n z e i c h n e t , daß in der Durchbrechung (16) des Kappenfortsatzes (14) radial zwischen der Außenseite (56) des Schließteilführungsteils (20) und der Innenseite (58) des Kappenfortsatzes (14) ein Dichtungsring (60) angeordnet ist.

9. Verschlußdeckel nach einem der vorhergehenden Ansprüche, dadurch g e k e n n z e i c h n e t , daß der Spannhebel (34) flächig und im wesentlichen kreissektorförmig ausgebildet ist und an seinem dem Kreisbogen (40) abgewandten Ende (42) eine das über die Kappenoberseite (30) hinausragende freie Ende (32) des Führungsteils (20) umgreifende und mit diesem gelenkig verbundene Gabel (44) aufweist, an deren Gabelenden (46, 48) jeweils eine zur Klappachse (38) exzentrische Nockenfläche vorgesehen ist.

10. Verschlußdeckel nach einem der vorhergehenden Ansprüche, dadurch g e k e n n z e i c h n e t , daß an der Kappenoberseite (30) eine zum Spannhebel (34) komplementäre Aussparung (52) zur Aufnahme des Spannhebels (34) in seiner umgeklappten, der Verriegelungsstellung entsprechenden Stellung vorgesehen ist.

11. Verschlußdeckel nach einem der vorhergehenden Ansprüche, dadurch g e k e n n z e i c h n e t, daß mindestens ein die Riegelnasen (26, 28) bildender Federbügel (24) am Schließteil (18) angeordnet ist.

12. Verschlußdeckel nach Anspruch 11, dadurch g e k e n n - z e i c h n e t, daß der Federbügel (24) aus Stahl hergestellt ist.

13. Verschlußdeckel nach Anspruch 11, dadurch g e k e n n - z e i c h n e t, daß der Federbügel (24) aus Kunststoff hergestellt ist.

14. Verschlußdeckel nach einem der Ansprüche 11 bis 13, dadurch g e k e n n z e i c h n e t, daß die Riegelnasen (26, 28) durch Druckfedern am Schließteil (18) abgestützt sind.

FIG. 1

FIG. 2

FIG. 3